# EUROPÄISCHE PATENTSCHRIFT

(11) **EP 1 670 135 B1**
(45) Veröffentlichungstag und Bekanntmachung des Hinweises auf die Patenterteilung: **08.04.2009**
(21) Anmeldenummer: 04405767.7
(22) Anmeldetag: 10.12.2004
(51) Int. Cl.: H02P 21/00

(54) **Verfahren zum Betrieb einer rotierenden elektrischen Maschine**
Method of operating a rotary electrical machine
Procédé de fonctionnement d'une machine électrique tournante

(43) Veröffentlichungstag der Anmeldung: 14.06.2006
(73) Patentinhaber: ABB Research Ltd., 8050 Zürich (CH); Eidgenössische Technische Hochschule Zürich, 8092 Zürich (CH)
(72) Erfinder: Geyer, Tobias, 8001 Zürich (CH); Papafotiou, Georgios, 8134 Adliswil (CH); Morari, Manfred, 8700 Küssnacht (CH)
(74) Vertreter: ABB Patent Attorneys

(56) Entgegenhaltungen:
- EP-A- 0 812 059
- WO-A-99/53607
- FR-A- 2 791 488
- US-A- 4 763 060

## Beschreibung

### Technisches Gebiet

Die Erfindung bezieht sich auf das Gebiet der Betriebsverfahren rotierender elektrischer Maschinen. Sie geht aus von einem Verfahren zum Betrieb einer rotierenden elektrischen Maschine gemäss dem Oberbegriff des unabhängigen Anspruchs.

### Stand der Technik

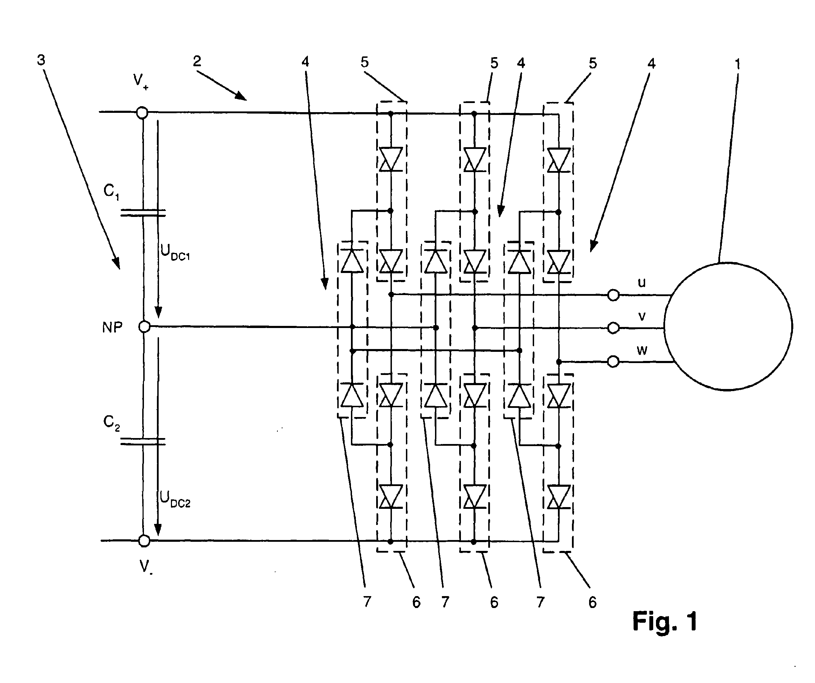

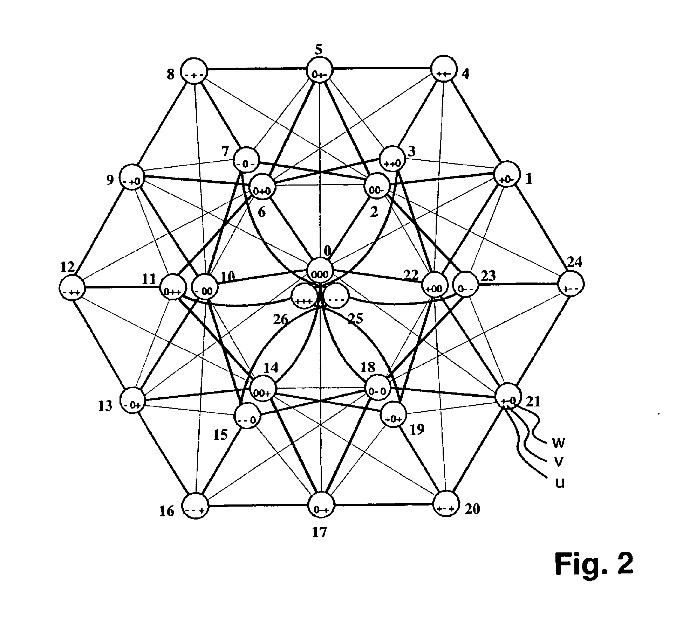

Heute werden in vielen Anwendungen Hochleistungsspannungsumrichterschaltungen eingesetzt. Eine solche Umrichterschaltung schaltet gängigerweise drei Spannungsniveaus und wird häufig zum Betrieb von rotierenden elektrischen Maschinen, insbesondere in Synchron- und Asynchronmaschinen, eingesetzt, welche rotierenden elektrischen Maschinen üblicherweise drei Statorwicklungen aufweisen. Bei einem gängigen Verfahren zum Betrieb einer rotierenden elektrischen Maschine ist diese phasenmässig mit einer solchen einen Gleichspannungskreis aufweisenden Umrichterschaltung zur Schaltung von allgemein m Spannungsniveaus verbunden, wobei m ≥ 2 ist. Der Gleichspannungskreis ist bei einer Umrichterschaltung zur Schaltung von typischerweise drei Spannungsniveaus durch einen ersten Kondensator und durch einen in Serie zum ersten Kondensator geschalteten zweiten Kondensator gebildet, wobei der Gleichspannungskreis zudem am ersten Kondensator einen ersten Hauptanschluss, am zweiten Kondensator einen zweiten Hauptanschluss und einen durch die zwei seriell verbundenen Kondensatoren gebildeten Teilanschluss aufweist. Weiterhin umfasst die Umrichterschaltung zur Schaltung von drei Spannungsniveaus Leistungshalbleiterschalter, welche in üblicher Weise verschaltet sind. In Fig. 1 ist dazu eine Ausführungsform einer gängigen dreiphasigen Umrichterschaltung zur Schaltung von drei Spannungsniveaus gezeigt. Verfahrensmässig werden die Phasen der Umrichterschaltung allgemein mit dem Gleichspannungskreis nach einer ausgewählten Schaltzustandskombination von Schaltzuständen der Leistungshalbleiterschalter der Umrichterschaltung verbunden. Bei einer Umrichterschaltung zur Schaltung von drei Spannungsniveaus werden die Phasen der Umrichterschaltung demgemäss mit dem ersten Hauptanschluss, mit dem zweiten Hauptanschluss oder mit dem Teilanschluss nach einer ausgewählten Schaltzustandskombination von Schaltzuständen der Leistungshalbleiterschalter der Umrichterschaltung verbunden. In einem in Fig. 2 gezeigten Zustandsdiagramm sind diese Schaltzustandkombinationen und deren Übergänge zueinander gezeigt, wobei die "+" für eine Verbindung der entsprechenden Phase mit dem ersten Hauptanschluss, "-" für eine Verbindung der entsprechenden Phase mit dem zweiten Hauptanschluss und "0" für eine Verbindung der entsprechenden Phase mit dem Teilanschluss steht.

Die Auswahl der entsprechenden Schaltzustandkombinationen erfolgt beispielsweise nach der bekannten "Direkten Drehmomentregelung " (DTC - Direct Torque Control), bei der der aktuelle Istwert des Drehmoments der rotierenden elektrischen Maschine, des magnetischen Statorflusses der rotierenden elektrischen Maschine und des Potentials am Teilanschluss zunächst jeweils mit einem zugehörigen vorgegebenen Wertebereich verglichen werden. Der jeweils vorgegebene Wertebereich ist oder kann zeitvariant sein und wird gängigerweise durch einen übergeordneten Regelkreis aus Referenzwerten des Drehmoments der rotierenden elektrischen Maschine, des magnetischen Statorflusses der rotierenden elektrischen Maschine und des Potentials am Teilanschluss bestimmt. Überschreitet nun ein aktueller Istwert seinen zugehörigen vorgegebenen Wertebereich, so wird eine Schaltzustandskombination in Abhängigkeit der vorangehenden ausgewählten Schaltzustandskombination aus einer Tabelle ausgewählt, so dass der sich zu dieser Schaltzustandskombination ergebende aktuelle Wert allenfalls wieder innerhalb des zugehörigen Wertebereichs liegen könnte, wobei es dafür keine Garantie gibt. Zudem wird eine Schaltzustandskombination immer nur entweder bezüglich des aktuellen Istwertes des Drehmoments, des magnetischen Statorflusses oder des Potentials bei Überschreiten des zugehörigen Wertebereichs ausgewählt. Eine gemeinsame Betrachtung des aktuellen Istwertes des Drehmoments, des magnetischen Statorflusses und des Potentials findet nicht statt.

Problematisch bei einem vorstehend beschriebenen Verfahren zum Betrieb einer rotierenden elektrischen Maschine mittels der bekannten "Direkten Drehmomentregelung " ist, dass zwischen der vorangehenden ausgewählten Schaltzustandskombination und der aktuell ausgewählten Schaltzustandskombination typischerweise mehrere Übergänge vorliegen, welche in Fig. 2 als Linien zwischen den Schaltzustandskombinationen dargestellt sind. Die Schaltzustandskombinationen und die Übergänge von einer Schaltzustandskombination zu einer anderen sind allgemein fix in der Tabelle abgelegt, wobei typischerweise nicht sämtliche Kombinationsmöglichkeiten von Schaltzustandskombination gemäss Fig. 2 in der Tabelle abgelegt sind. Weiterhin wird bei der "Direkten Drehmomentregelung " nur eine Schaltzustandskombination in Abhängigkeit der vorangehenden ausgewählten Schaltzustandskombination mit den zugehörigen Übergängen ausgewählt, welche in der Tabelle abgelegt ist und welche den zur ausgewählten Schaltzustandskombination ergebende aktuelle Wert wieder innerhalb des zugehörigen Wertebereichs zurück bringt. Alternativ auszuwählende Schaltzustandskombinationen, insbesondere mit eventuell weniger Übergängen zur vorangehende ausgewählten Schaltzustandskombination sind in der Tabelle nicht abgelegt. Mehrere Übergänge zwischen Schaltzustandskombinationen generieren aber eine Vielzahl an Schalthandlungen der Leistungshalbleiterschalter der Umrichterschaltung, wodurch die Schaltfrequenz der Leistungshalbleiterschalter ansteigt. Eine solche hohe Schaltfrequenz erzeugt aber in den Leistungshalbleiterschaltern der Umrichterschaltung Wärmeverluste (höherer Energieverbrauch), durch welche die Leistungshalbleiterschalter schneller altern, beschädigt oder gar zerstört werden können.

In der FR 2 791 488 A1 sowie in der WO 99/53607 sind gattungsgemässe Verfahren zum Betrieb einer rotierenden elektrischen Maschine angegeben.

### Darstellung der Erfindung

Aufgabe der Erfindung ist es deshalb, ein Verfahren zum Betrieb einer rotierenden elektrischen Maschine anzugeben, durch welches die Schalfrequenz von Leistungshalbleiterschaltem einer mit der rotierenden elektrischen Maschine phasenmässig verbundenen Umrichterschaltung zur Schaltung von m Spannungsniveaus reduziert werden kann, wobei m ≥ 2 ist. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zum Betrieb einer rotierenden elektrischen Maschine ist die rotierende elektrische Maschine phasenmässig mit einer einen Gleichspannungskreis aufweisenden Umrichterschaltung zur Schaltung von m Spannungsniveaus verbunden, wobei m ≥ 2 ist. Verfahrensmässig werden in einem Schritt (a) die Phasen der Umrichterschaltung mit dem Gleichspannungskreis nach einer ausgewählten Schaltzustandskombination von Schaltzuständen von Leistungshalbleiterschaltern der Umrichterschaltung verbunden. Erfindungsgemäss erfolgt die Auswahl dieser Schaltzustandskombination in folgenden weiteren Schritten:
(b) beginnend mit einem Startabtastzeitpunkt k für eine wählbare Anzahl N Abtastzeitpunkte:
   Bestimmung sämtlicher zulässiger Schaltzustandskombinationen zu jedem der N Abtastzeitpunkte, wobei N ≥ 1 ist,
(c) Bildung von Schaltzustandssequenzen für jede bestimmte Schaltzustandskombination zum Startabtastzeitpunkt k, wobei jede Schaltzustandssequenz eine Aneinanderreihung von zu der jeweiligen Schaltzustandskombination zum Startabtastzeitpunkt k zugehöriger bestimmter Schaltzustandskombinationen der N Abtastzeitpunkte ist,
(d) für jede der Schaltzustandssequenzen Berechnung einer Drehmomenttrajektorie der rotierenden elektrischen Maschine und einer magnetischen Statorflusstrajektorie der rotierenden elektrischen Maschine aus ermittelten Zustandswertesätze der rotierenden elektrischen Maschine und der Umrichterschaltung für den Startabtastzeitpunkt k bis zum Abtastzeitpunkt k+N,
(e) Auswahl der Schaltzustandssequenzen, bei welchen eine zugehörige Drehmomenttrajektorie und eine magnetische Statorflusstrajektorie zum (k+N)-ten Abtastzeitpunkt jeweils innerhalb eines vorgegebenen Wertebereichs liegt, oder
   bei welchen sich die Trajektorienwerte einer zugehörigen Drehmomenttrajektorie und die Trajektorienwerte einer zugehörigen magnetischen Statorflusstrajektorie bezüglich des k-ten Abtastzeitpunktes bis zum (k+N)-ten Abtastzeitpunkt dem jeweiligen vorgegebenen Wertebereich annähert,
(f) für jede der ausgewählten Schaltzustandssequenzen Bestimmung der Anzahl Zeitpunkte n, bis die Extrapolation der Trajektorienwerte der zugehörigen Drehmomenttrajektorie (M) oder der Trajektorienwerte der magnetischen Statorflusstrajektorie bezüglich des (k+N-1)-ten Abtastzeitpunktes und (k+N)-ten Abtastzeitpunktes ausserhalb des jeweiligen vorgegebenen Wertebereichs liegt,
(g) für jede der ausgewählten Schaltzustandssequenzen Bestimmung der Gesamtanzahl Schaltübergänge s der zugehörigen bestimmten Schaltzustandskombinationen,
(h) für jede der ausgewählten Schaltzustandssequenzen Berechnung eines Gütewertes c aus der Anzahl Zeitpunkte n und der Gesamtanzahl Schaltübergänge s,
(i) Setzen derjenigen bestimmten Schaltzustandskombination zum Startabtastzeitpunkt k als ausgewählte Schaltzustandskombination, bei der der Gütewert c der zugehörigen ausgewählten Schaltzustandssequenz am kleinsten ist,
(j) Wiederholung der Schritte (a) bis (i), wobei k=k+1 ist.

Mittels der Schritte (b) bis (j) wird mit Vorteil stets die optimale Schaltzustandskombination ausgehend von der vorangehenden ausgewählten Schaltzustandskombination und bezüglich der Anzahl Übergänge von der vorangehenden ausgewählten Schaltzustandskombination zu der ausgewählten Schaltzustandskombination und bezüglich des jeweiligen vorgegebenen Wertebereichs für das Drehmoment der rotierenden elektrischen Maschine und für den magnetischen Statorfluss der rotierenden elektrischen Maschine ausgewählt. Damit lässt sich die Anzahl an Schalthandlungen der Leistungshalbleiterschalter der Umrichterschaltung vorteilhaft verringern und damit die Schaltfrequenz der Leistungshalbleiterschalter reduzieren. Die reduzierte Schaltfrequenz führt dazu, dass in den Leistungshalbleiterschaltern weniger Wärmeverluste erzeugt werden, wodurch die Leistungshalbleiterschalter langsamer altern und weitestgehend vor Beschädigung oder Zerstörung geschützt werden können. Zudem werden die jeweiligen Wertebereiche insgesamt besser eingehalten.

Allgemein ermöglicht das erfindungsgemässe Verfahren somit eine Vorhersage des Verhaltens der rotierenden elektrischen Maschine über mehr als einen Abtastzeitpunkt für bestimmte Schaltzustandssequenzen, wobei der Horizont von N Abtastzeitpunkten nach Anwendung der Schritte (a) bis (i) durch den Schritt (j) um einen Abtastzeitpunkt verschoben wird und dann aber immer nur die erste Schaltzustandskombination, insbesondere die k-te Schaltzustandskombination, einer Schaltzustandssequenz ausgewählt wird. Ein Gütekriterium approximiert beziehungsweise bildet dann die Schaltfrequenz nach. Schliesslich werden bei dem erfindungsgemässen Verfahren ferner die Schaltzustandskombinationen bezüglicher aller relevanten Grössen, insbesondere das Drehmoment und der magnetische Statorfluss, bei Überschreiten des zugehörigen Wertebereichs gemeinsam betrachtet.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform einer dreiphasigen Umrichterschaltung zur Schaltung von drei Spannungsniveaus,
- Fig. 2: ein Zustandsdiagramm mit Schaltzustandkombinationen der Phasen der Umrichterschaltung und
- Fig. 3: ein schematischer Verlauf von berechneten Drehmomenttrajektorien für N=2 Abtastzeitpunkte.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

In Fig. 1 ist eine Ausführungsform einer dreiphasigen Umrichterschaltung 2 zur Schaltung von drei Spannungsniveaus gezeigt, wobei eine rotierende elektrische Maschine 1 phasenmässig mit einem Gleichspannungskreis 3 Umrichterschaltung 2 verbunden ist. Allgemein kann die rotierende elektrische Maschine 1 mit einer Umrichterschaltung 2 zur Schaltung von m Spannungsniveaus verbunden sein, wobei dann m ≥ 2 ist. Gemäss Fig. 1 ist der Gleichspannungskreis 3 durch einen ersten Kondensator C₁ und durch einen in Serie zum ersten Kondensator C₁ geschalteten zweiten Kondensator C₂ gebildet, wobei C₁ wertemässig im wesentlichen gleich C₂ ist. Der Gleichspannungskreis 3 gemäss der beispielhaften Ausführungsform einer Umrichterschaltung zur Schaltung von drei Spannungsniveaus nach Fig. 1 weist am ersten Kondensator C₁ einen ersten Hauptanschluss V₊, am zweiten Kondensator C₂ einen zweiten Hauptanschluss V. und einen durch die zwei seriell verbundenen Kondensatoren C₁, C₂ gebildeten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss V₊ und die zweite Schaltgruppe 6 mit dem zweiten Hauptanschluss V. verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe 7 als unidirektionale nicht-ansteuerbare Leistungshalbleiterschalter ausgebildet sind. Es ist aber auch denkbar, das auch die Leistungshalbleiterschalter der dritten Schaltgruppe 7 als ansteuerbare bidirektionale Leistungshalbleiterschalter ausgebildet sind.

Verfahrensmässig werden nun die Phasen u, v, w der Umrichterschaltung 2, bei der es sich allgemein um eine Umrichterschaltung 2 zur Schaltung m Spannungsniveaus handelt, in einem ersten Schritt (a) mit dem Gleichspannungskreis 3 nach einer ausgewählten Schaltzustandskombination SK_{a,k} von Schaltzuständen der Leistungshalbleiterschaltern der Umrichterschaltung 2 verbunden. Wie bereits eingangs erwähnt, ist in Fig. 2 beispielhaft ein Zustandsdiagramm von Schaltzustandskombinationen einer Umrichterschaltung 2 zur Schaltung von drei Spannungsniveaus gezeigt, wobei "+" für eine Verbindung der entsprechenden Phase u, v, w mit dem ersten Hauptanschluss V₊, "-" für eine Verbindung der entsprechenden Phase u, v, w mit dem zweiten Hauptanschluss V₋ und "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen. Es sei erwähnt, dass sich ein Zustandsdiagramm von Schaltzustandskombinationen einer Umrichterschaltung 2 beispielsweise zur Schaltung von m=5 Spannungsniveaus anders darstellen würde. Insbesondere kann der Fachmann sicher eine Umrichterschaltung realisieren, bei welcher ausgehend von einer Schaltzustandskombination SK ohne Einschränkung alle möglichen schaltbaren Schaltzustandskombinationen SK dieser Umrichterschaltung geschaltet werden können.

Erfindungsgemäss erfolgt die Auswahl der vorstehend genannten Schaltzustandskombination SK_{a,k} in folgenden weiteren Schritten:
Bei Schritt (b) werden beginnend mit einem Startabtastzeitpunkt k für eine wählbare Anzahl N Abtastzeitpunkte sämtliche zulässige Schaltzustandskombinationen SKₖ, ..., SK_{k+N-1} zu jedem der N Abtastzeitpunkte, vorzugsweise ausgehend von der jeweils vorangehenden bestimmten Schaltzustandskombination SKₖ₋₁, bestimmt, wobei N ≥ 1 ist, und wobei vorzugsweise die erste vorangehende bestimmte Schaltzustandskombination SKₖ₋₁ die vorangehende ausgewählte Schaltzustandskombination SK_{a,k-1}, d.h. zum Abtastzeitpunkt k-1, ist.
Bei Schritt (c) werden Schaltzustandssequenzen SSK für jede bestimmte Schaltzustandskombination SKₖ zum Startabtastzeitpunkt k gebildet, wobei jede Schaltzustandssequenz SSK eine Aneinanderreihung von zu der jeweiligen Schaltzustandskombination SKₖ zum Startabtastzeitpunkt k zugehöriger bestimmter Schaltzustandskombinationen SK_{k, ...,} SK_{k+N-1} der N Abtastzeitpunkte ist. Anschaulich gesehen repräsentiert eine solche Schaltzustandssequenz SSK beispielhaft eine Reihe von möglichen Schaltzustandskombinationen SKₖ, ..., SK_{k+N-1} gemäss Fig. 2 entlang der zugehörigen Linien zu einer der möglichen Schaltzustandskombinationen SKₖ zum Startabtastzeitpunkt k.

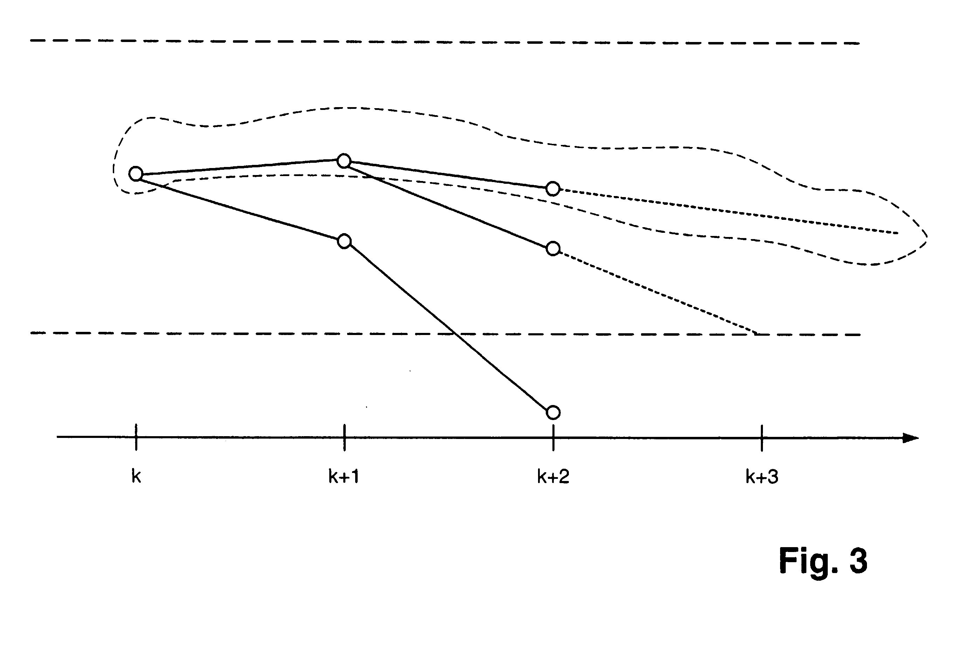

Bei Schritt (d) wird dann für jede der Schaltzustandssequenzen SSK eine Drehmomenttrajektorie M der rotierenden elektrischen Maschine 1 und eine magnetische Statorflusstrajektorie φ der rotierenden elektrischen Maschine 1 aus ermittelten Zustandswertesätze X_{e,k,...} , X_{e,k+N} der rotierenden elektrischen Maschine und der Umrichterschaltung für den Startabtastzeitpunkt k bis zum Abtastzeitpunkt k+N berechnet. Jeder der vorstehend genannten ermittelten Zustandswertesätzen X_{e,k},... , X_{e,k+N} beinhaltet beispielsweise zwei Statorflusswerte φ_{eS1,k},... , φ_{eS1,k+N}; φ_{eS2,k},... , φ_{S2,k+N}, zwei Rotorflusswerte. φ_{eR1,k},... , φ_{eR1,k+N}; φ_{eR2,k},... , φ_{eR2,k+N} und gegebenenfalls einen Geschwindigkeitswert V_{e,k},... , V_{e,k+N}. Zur Ermittlung der Zustandswertesätze X_{e,k},... , X_{e,k+N} werden zunächst die beiden Statorflusswerte φ_{eS1,k}; φ_{eS2,k} zum Abtastzeitpunkt k, die beiden Rotorflusswerte φ_{eR1,k}; φ_{eR2,k} zum Abtastzeitpunkt k und gegebenenfalls der Geschwindigkeitswert V_{e,k} zum Abtastzeitpunkt k beispielsweise durch Messung oder Schätzung ermittelt, wobei diese Werte den Zustandswertesatz X_{e,k} zum Abtastzeitpunkt k bilden. Aus dem Zustandswertesatz X_{e,k} zum Abtastzeitpunkt k werden dann Trajektorienwerte M_{T,k}; φ_{T,k} zum Abtastzeitpunkt k der Drehmomenttrajektorie M und der magnetische Statorflusstrajektorie φ nach einem für den Fachmann bekannten Berechnungsmodell, welches die elektrische Maschine 1 und die Umrichterschaltung 2 beschreibt beziehungsweise funktionell abbildet, berechnet. Dann wird nach dem Berechnungsmodell der Zustandswertesatz X_{e,k+1} zum Abtastzeitpunkt k+1 in Abhängigkeit des Zustandswertesatzes X_{e,k} zum Abtastzeitpunkt k und in Abhängigkeit der bestimmten Schaltzustandskombinationen SKₖ zum Abtastzeitpunkt k der zugehörigen Schaltzustandssequenz SSK durch Berechnung ermittelt und daraus dann die Trajektorienwerte M_{T,k+1;} φ_{T,k+1} zum Abtastzeitpunkt k+1 der Drehmomenttrajektorie M und der magnetischen Statorflusstrajektorie φ berechnet. Die Berechnung der Zustandswertesätze X_{e,k+2},... , X_{e,k+N} für die Abtastzeitpunkte k+2 bis k+N erfolgt analog zu der vorstehend aufgezeigten Berechnung des Zustandswertesatzes X_{e,k+1}, wobei für jede Berechnung der Zustandswertesätze X_{e,k+2},... , X_{e,k+N} jeweils die zugehörigen vorangehenden berechneten Zustandswertesätze X_{e.k+1},... , X_{e,k+N-1} sowie die bestimmte Schaltzustandskombinationen SKₖ₊₁, ..., SK_{k+N-1} zum Abtastzeitpunkt k+1 bis k+N-1 der zugehörigen Schaltzustandssequenz SSK herangezogen werden. Die aus den Zustandswertesätze X_{e,k+2},... , X_{e,k+N} folgende Berechnung der Trajektorienwerte M_{T,k+2}, ..., M_{T,k+N}; φ_{T,k+2}, ..., φ_{T,k+N} für die Abtastzeitpunkte k+2 bis k+N erfolgt ebenfalls analog zu der vorstehend aufgezeigten Berechnung der Trajektorienwerte M_{T,k}; φ_{T,k}; M_{T,k+1}; φ_{T,k+1} für die Abtastzeitpunkte k und k+1. Durch die vorstehend beschriebene Berechnung der Trajektorienwerte M_{T,k}, ..., M_{T,k+N}; φ_{T,k}, ..., φ_{T,k+N} entsteht für jede Schaltzustandssequenz SSK besagte Drehmomenttrajektorie M der rotierenden elektrischen Maschine 1 und eine magnetische Statorflusstrajektorie φ der rotierenden elektrischen Maschine 1, wobei in Fig. 3 beispielhaft ein schematischer Verlauf von solchen berechneten Drehmomenttrajektorien M von zugehörigen Schaltzustandssequenzen SSK für N=2 Abtastzeitpunkte gezeigt ist und dabei die Punkte der Drehmomenttrajektorien M den zugehörigen ermittelten Trajektorienwerten M_{T,k}, ..., M_{T,k+N} entsprechen. Es sei erwähnt, dass auch zunächst sämtliche Zustandswertesätze X_{e,k},... , X_{e,k+N} für die Abtastzeitpunkte k bis k+N gemäss vorstehend erläutertem Vorgehen ermittelt werden können und danach dann daraus die jeweiligen Trajektorienwerte M_{T,k, ...}, M_{T,k+N}; φ_{T,k, ...}, φ_{T,k+N} für die Abtastzeitpunkte k bis k+N zur Bildung der Drehmomenttrajektorie M und der magnetische Statorflusstrajektorie φ nach vorstehendem Vorgehen berechnet werden.
In dem weiteren Schritt (e) werden dann die Schaltzustandssequenzen SSKₐ ausgewählt, bei welchen eine zugehörige Drehmomenttrajektorie M und eine magnetische Statorflusstrajektorie φ zum (k+N)-ten Abtastzeitpunkt jeweils innerhalb eines vorgegebenen Wertebereichs liegt. Bezogen auf die Drehmomenttrajektorien M gemäss Fig. 3 würde dies nur für die oberen beiden Drehmomenttrajektorien M, nicht aber für die untere Drehmomenttrajektorie M zutreffen, wobei der vorgegebene Wertebereich in Fig. 3 durch die zwei gestrichelten horizontalen Linien angedeutet ist. Es sei erwähnt, dass der jeweils vorgegebene Wertebereich zeitvariant ist und gängigerweise durch einen übergeordneten Regelkreis aus Referenzwerten des Drehmoments der rotierenden elektrischen Maschine und des magnetischen Statorflusses der rotierenden elektrischen Maschine 1 bestimmt wird, wobei dem Fachmann solche Regelkreise bekannt sind. Alternativ werden dann die Schaltzustandssequenzen SSKₐ ausgewählt, bei welchen sich die Trajektorienwerte M_{T,k, ...,} M_{T,k+N} einer zugehörigen Drehmomenttrajektorie M und die Trajektorienwerte φ_{T,k, ...,} φ_{T,k+N} einer zugehörigen magnetischen Statorflusstrajektorie φ bezüglich des k-ten Abtastzeitpunktes bis zum (k+N)-ten Abtastzeitpunkt dem jeweiligen vorgegebenen Wertebereich annähert.
Bei Schritt (f) wird daraufhin für jede der ausgewählten Schaltzustandssequenzen SSKₐ die Anzahl Zeitpunkte n bestimmt, bis die Extrapolation der Trajektorienwerte M_{T,k+N-1}, M_{T,k+N} der zugehörigen Drehmomenttrajektorie M oder der Trajektorienwerte φ_{T,k+N-1}, φ_{T,k+N} der magnetischen Statorflusstrajektorie φ bezüglich des (k+N-1)-ten Abtastzeitpunktes und (k+N)-ten Abtastzeitpunktes ausserhalb des jeweiligen vorgegebenen Wertebereichs liegt, d.h. bis eine der Extrapolationen den jeweiligen vorgegebenen Wertebereich als erstes verlässt beziehungsweise die Grenzen des jeweiligen vorgegebenen Wertebereichs schneidet. In Fig. 3 ist die jeweilige Extrapolation für die beiden oberen relevanten Drehmomenttrajektorien M gestrichelt eingezeichnet, wobei die Extrapolation der einen oberen relevanten Drehmomenttrajektorie M gemäss Fig. 3 den vorgegebenen Wertebereich bereits bei k+3 verlässt, die Extrapolation der anderen oberen relevanten Drehmomenttrajektorie M, welche zur besseren Kennzeichnung gestrichelt umrandet ist, jedoch bei k+3 noch innerhalb des vorgegebenen Wertebereichs liegt.
Ferner wird bei Schritt (g) für jede der ausgewählten Schaltzustandssequenzen SSKₐ die Gesamtanzahl Schaltübergänge s der zugehörigen bestimmten Schaltzustandskombinationen SK_{k,} ..., SK_{k+N-1} bestimmt.
Weiterhin wird bei Schritt (h) für jede der ausgewählten Schaltzustandssequenzen SSKₐ ein Gütewert c aus der Anzahl Zeitpunkte n und der Gesamtanzahl Schaltübergänge s berechnet. Vorzugsweise wird der Gütewert c durch Division der Gesamtanzahl Schaltübergänge s durch die Anzahl Zeitpunkte n berechnet.
In einem weiteren Schritt (i) wird dann diejenige bestimmte Schaltzustandskombination SKₖ zum Startabtastzeitpunkt k als ausgewählte Schaltzustandskombination SK_{a,k} gesetzt, bei der der Gütewert c der zugehörigen ausgewählten Schaltzustandssequenz SSKₐ am kleinsten ist.
Schliesslich werden bei Schritt (j) die Schritte (a) bis (i) wiederholt, wobei k=k+1 ist, d.h. die Auswahl der Schaltzustandskombination SK_{a,k} findet für k=k+1 gemäss dem vorstehend beschriebenen Ablauf nach den Schritten (a) bis (i) statt. N ist für jeden der Schritte (a) bis (j) konstant.

Mittels der Schritte (b) bis (j) und insbesondere durch die Extrapolation ist es möglich, eine Vorhersage für das weitere Verhalten des Gesamtsystems, d.h. der rotierenden elektrischen Maschine 1 und der damit verbundenen Umrichterschaltung 2, zu treffen und danach mit Vorteil stets die optimale Schaltzustandskombination SK_{a,k} ausgehend von der vorangehenden ausgewählten Schaltzustandskombination SK_{a,k-1} und bezüglich der Anzahl Übergänge von der vorangehenden ausgewählten Schaltzustandskombination SK_{a,k-1} zu der ausgewählten Schaltzustandskombination SK_{a,k} und bezüglich des jeweiligen vorgegebenen Wertebereichs für das Drehmoment der rotierenden elektrischen Maschine 1 und für den magnetischen Statorfluss der rotierenden elektrischen Maschine 1 auszuwählen. Damit lässt sich die Anzahl an Schalthandlungen der Leistungshalbleiterschalter der Umrichterschaltung 2 vorteilhaft verringern und damit die Schaltfrequenz der Leistungshalbleiterschalter reduzieren. Die Leistungshalbleiterschalter generieren aufgrund der reduzierten Schaltfrequenz mit Vorteil weniger Wärmeverluste und haben dadurch einen geringeren Energieverbrauch, so dass die Leistungshalbleiterschalter dadurch langsamer altern und weitestgehend vor Beschädigung oder Zerstörung geschützt werden können.

Es sei erwähnt, dass die Schritte (a) bis (j) als Software realisiert werden können und diese dann beispielsweise auf ein Computersystem, insbesondere mit einem digitalen Signalprozessor, geladen werden und darauf ablaufen können.

Wie bereits erwähnt, ist in Fig. 1 eine Umrichterschaltung 2 zur Schaltung von m=3 Spannungsniveaus gezeigt, wobei der Gleichspannungskreis 3 dann m-2 Teilanschlüsse NP, d.h. einen einzigen Teilanschluss NP aufweist. Für den allgemeinen Fall einer Umrichterschaltung 2 zur Schaltung von m Spannungsniveaus mit m ≥ 3 weist die Umrichterschaltung 2 dann am Gleichspannungskreis 3 m-2 Teilanschlüsse NP auf. Bezüglich Schritt (d) des erfindungsgemässen Verfahrens bedeutet dies, dass für jede der Schaltzustandssequenzen SSK zusätzlich m-2 Potentialtrajektorien U_{NP} für Potentiale an den m-2 Teilanschlüssen NP aus ermittelten Zustandswertesätzen X_{e,k},... , X_{e,k+N} der rotierenden elektrischen Maschine 1 und der Umrichterschaltung 2 für den Startabtastzeitpunkt k bis zum Abtastzeitpunkt k+N berechnet werden. Die angesprochene Berechnung erfolgt analog der bereits erläuterten Berechnung der entsprechenden Drehmomenttrajektorie M der rotierenden elektrischen Maschine 1 und magnetischen Statorflusstrajektorie φ der rotierenden elektrischen Maschine 1.
Weiterhin werden für m ≥ 3 bezüglich Schritt (e) die Schaltzustandssequenzen SSKₐ ausgewählt werden, bei welchen zusätzlich zugehörige m-2 Potentialtrajektorien U_{NP} zum (k+N)-ten Abtastzeitpunkt jeweils innerhalb eines vorgegebenen Wertebereichs liegen, oder bei welchen sich zusätzlich die Trajektorienwerte U_{NP,k, ...,} U_{NP,k+N} zugehöriger m-2 Potentialtrajektorien U_{NP} bezüglich des k-ten Abtastzeitpunktes bis zum (k+N)-ten Abtastzeitpunkt dem jeweiligen vorgegebenen Wertebereich annähern. Ferner wird für m ≥ 3 bezüglich Schritt (f) für jede der ausgewählten Schaltzustandssequenzen SSKₐ die Anzahl Zeitpunkte n bestimmt wird, bis die Extrapolation der Trajektorienwerte M_{T,k+N-1}, M_{T,k+N} der zugehörigen Drehmomenttrajektorie M oder der Trajektorienwerte φ_{T,k+N-1}, φ_{T,k+N} der magnetischen Statorflusstrajektorie φ oder der Trajektorienwerte U_{NP,k+N-1}, U_{NP,k+N} der m-2 Potentialtrajektorien U_{NP} bezüglich des (k+N-1)-ten Abtastzeitpunktes und (k+N)-ten Abtastzeitpunktes ausserhalb des jeweiligen vorgegebenen Wertebereichs liegt. Es versteht sich, dass für m ≥ 3 die Schritte (a) bis (c) und (g) bis (j) beibehalten werden.

Für m ≥ 3 ist es durch die Schritte (b) bis (j) und insbesondere durch die Extrapolation nun möglich, eine Vorhersage für das weitere Verhalten des Gesamtsystems, d.h. der rotierenden elektrischen Maschine 1 und der damit verbundenen Umrichterschaltung 2, zu treffen und danach mit Vorteil stets die optimale Schaltzustandskombination SK_{a,k} ausgehend von der vorangehenden ausgewählten Schaltzustandskombination SK_{a,k-1}, und bezüglich der Anzahl Übergänge von der vorangehenden ausgewählten Schaltzustandskombination SK_{a,k-1} zu der ausgewählten Schaltzustandskombination SK_{a,k} und bezüglich des jeweiligen vorgegebenen Wertebereichs für das Drehmoment der rotierenden elektrischen Maschine 1, für den magnetischen Statorfluss der rotierenden elektrischen Maschine 1 und für die m-2 Potential an den m-2 Teilanschlüssen NP auszuwählen. Damit lässt sich die Anzahl an Schalthandlungen der Leistungshalbleiterschalter der Umrichterschaltung 2, wie bereits erwähnt, vorteilhaft verringern und damit die Schaltfrequenz der Leistungshalbleiterschalter reduzieren.

Vorteilhaft wird allgemein in einem Schritt (k) der Schritt (b) und (c) ausgesetzt und eine Schaltzustandssequenz SSK für die vorangehende ausgewählte Schaltzustandskombination SK_{a,k-1} gebildet, wobei die Schaltzustandssequenz SSK dann eine Aneinanderreihung von N vorangehenden ausgewählten Schaltzustandskombination SK_{a,k-1} ist, und zudem die vorangehende ausgewählte Schaltzustandskombination SK_{a,k-1}, als ausgewählte Schaltzustandskombination SK_{a,k} gesetzt und schliesslich Schritt (d) angewendet und die Schritte (e) bis (i) ausgesetzt, falls die Trajektorienwerte M_{T,k,} ..., M_{T,k+N} der zugehörigen Drehmomenttrajektorie M und die Trajektorienwerte φ_{T,k,} ..., φ_{T,k+N} der zugehörigen magnetischen Statorflusstrajektorie φ bezüglich des k-ten Abtastzeitpunktes bis zum (k+N)-ten Abtastzeitpunkt innerhalb des jeweiligen vorgegebenen Wertebereichs liegen. Für m ≥ 3 wird bei dem Schritt (k) der Schritt (b) und (c) ausgesetzt und eine Schaltzustandssequenz SSK für die vorangehende ausgewählte Schaltzustandskombination SK_{a,k-1} gebildet, wobei die Schaltzustandssequenz SSK dann eine Aneinanderreihung von N vorangehenden ausgewählten Schaltzustandskombination SK_{a,k-1} ist, und zudem die vorangehende ausgewählte Schaltzustandskombination SK_{a,k-1} als ausgewählte Schaltzustandskombination SK_{a,k} gesetzt und schliesslich Schritt (d) angewendet und die Schritte (e) bis (i) ausgesetzt, falls die Trajektorienwerte M_{T,k}, ..., M_{T,k+N} der zugehörigen Drehmomenttrajektorie M, die Trajektorienwerte φ_{T,k}, ... , φ_{T,k+N} der zugehörigen magnetischen Statorflusstrajektorie φ und die Trajektorienwerte U_{NP,k}, ..., U_{NP,k+N} zugehöriger m-2 Potentialtrajektorien U_{NP} bezüglich des k-ten Abtastzeitpunktes bis zum (k+N)-ten Abtastzeitpunkt innerhalb des jeweiligen vorgegebenen Wertebereichs liegen. Auf diese Weise Rechenzeit gespart werden, da Schritte (b) und (c) und Schritte (e) bis (i) ausgesetzt werden. Es versteht sich, dass die Schritte (b) bis (i) dann angewendet werden und Schritt (k) nicht angewendet wird, falls vorstehend genannte Kriterien für die Trajektorienwerte M_{T,k}, ..., M_{T,k+N}; φ_{T,k}, ..., φ_{T,k+N}; U_{NP,k}, ... , U_{NP,k+N} nicht erfüllt sind.

Es sei erwähnt, dass Schritt (k) ebenfalls als Software realisiert werden kann und dieser dann beispielsweise auf ein Computersystem, insbesondere mit einem digitalen Signalprozessor, geladen werden und darauf ablaufen kann.

Es hat sich als vorteilhaft erwiesen, dass für die Extrapolation der Trajektorienwerte M_{T,k+N-1}, M_{T,k+N} der Drehmomenttrajektorie M eine lineare Extrapolation gewählt wird, und dass für die Extrapolation der Trajektorienwerte φ_{T,k+N-1}, φ_{T,k+N} der magnetischen Statorflusstrajektorie φ eine quadratische Extrapolation gewählt wird. In diesem Fall wird durch Wahl einer quadratischen Extrapolation für die magnetische Statorflusstrajektorie φ in Kombination mit der Wahl einer linearen Extrapolation für die Drehmomenttrajektorie M eine besonders genaue Vorhersage für das Verhalten des Gesamtsystems ermöglicht, so dass die Auswahl der Schaltzustandskombination SK_{a,k} weiter präzisiert werden kann und daraus eine weitere Reduzierung der Schalfrequenz der Leistungshalbleiterschalter resultiert. Alternativ kann für m ≥ 3 für die für die Extrapolation der Trajektorienwerte M_{T,k+N-1}, M_{T,k+N} der Drehmomenttrajektorie M und der Trajektorienwerte U_{NP,k+N-1}, U_{NP,k+N} der m-2 Potentialtrajektorien U_{NP} jeweils eine lineare Extrapolation gewählt werden und für die Extrapolation der Trajektorienwerte φ_{T,k+N-1}, φ_{T,k+N} der magnetischen Statorflusstrajektorie φ eine quadratische Extrapolation gewählt werden, wobei sich dieselben genannten Vorteile ergeben.

Weiterhin ist es denkbar, dass für die Extrapolation der Trajektorienwerte M_{T,k+N-1}, M_{T,k+N} der Drehmomenttrajektorie M und der Trajektorienwerte φ_{T,k+N-1}, φ_{T,k+N} der magnetischen Statorflusstrajektorie φ jeweils eine lineare Extrapolation gewählt wird, wobei für m ≥ 3 für die Extrapolation der Trajektorienwerte M_{T,k+N-1}, M_{T,k+N} der Drehmomenttrajektorie M, der Trajektorienwerte φ_{T,k,N-1,} φ_{T,k+N} der magnetischen Statorflusstrajektorie φ und zusätzlich für die Extrapolation der Trajektorienwerte U_{NP,k+N-1}, U_{NP,k+N} der m-2 Potentialtrajektorien U_{NP} jeweils eine lineare Extrapolation gewählt wird.

Eine weitere Möglichkeit besteht darin, dass für die Extrapolation der Trajektorienwerte M_{T,k+N-1}, M_{T,k+N} der Drehmomenttrajektorie M und der Trajektorienwerte φ_{T,k+N-1}, φ_{T,k+N} der magnetischen Statorflusstrajektorie φ jeweils eine quadratische Extrapolation gewählt wird, wobei für m ≥ 3 für die Extrapolation der Trajektorienwerte M_{T,k+N-1}, M_{T,k+N} der Drehmomenttrajektorie M und der Trajektorienwerte φ_{T,k+N-1}, φ_{T,k+N} der magnetischen Statorflusstrajektorie φ jeweils eine quadratische Extrapolation gewählt wird und zusätzlich für die Extrapolation der Trajektorienwerte U_{NP,k,N-1}, U_{NP,k+N} der m-2 Potentialtrajektorien U_{NP} eine lineare Extrapolation gewählt wird.

### Bezugszeichenliste

- 1: rotierende elektrische Maschine
- 2: Umrichterschaltung zur Schaltung von drei Spannungsniveaus
- 3: Gleichspannungskreis
- 4: Teilumrichtersystem
- 5: erste Schaltgruppe
- 6: zweite Schaltgruppe
- 7: dritte Schaltgruppe

## Patentansprüche

1. Verfahren zum Betrieb einer rotierenden elektrischen Maschine (1), wobei die rotierende elektrische Maschine phasenmässig mit einer einen Gleichspannungskreis (3) aufweisenden Umrichterschaltung (2) zur Schaltung von m Spannungsniveaus verbunden ist, wobei m ≥ 2 ist,
mit den Schritten
(a) Verbindung der Phasen (u, v, w) der Umrichterschaltung (2) mit dem Gleichspannungskreis (3) nach einer ausgewählten Schaltzustandskombination (SK_{a,k}) von Schaltzuständen von Leistungshalbleiterschaltern der Umrichterschaltung (2), Auswahl der Schaltzustandskombination (SK_{a,k}) in folgenden Schritten:
(b) beginnend mit einem Startabtastzeitpunkt k für eine wählbare Anzahl N Abtastzeitpunkte:
Bestimmung sämtlicher zulässiger Schaltzustandskombinationen (SK, ..., SK_{k+N-1}) zu jedem der N Abtastzeitpunkte, wobei N ≥ 1 ist,
(c) Bildung von Schaltzustandssequenzen (SSK) für jede bestimmte Schaltzustandskombination (SKₖ) zum Startabtastzeitpunkt k, wobei jede Schaltzustandssequenz (SSK) eine Aneinanderreihung von zu der jeweiligen Schaltzustandskombination (SKₖ) zum Startabtastzeitpunkt k zugehöriger bestimmter Schaltzustandskombinationen (SKₖ, ..., SK_{k+N-1}) der N Abtastzeitpunkte ist,
(d) für jede der Schaltzustandssequenzen (SSK) Berechnung einer Drehmomenttrajektorie (M) der rotierenden elektrischen Maschine (1) und einer magnetischen Statorflusstrajektorie (φ) der rotierenden elektrischen Maschine (1) aus ermittelten Zustandswertesätze (X_{e,k},... , X_{e,k+N}) der rotierenden elektrischen Maschine (1) und der Umrichterschaltung (2) für den Startabtastzeitpunkt k bis zum Abtastzeitpunkt k+N,
(e) Auswahl der Schaltzustandssequenzen (SSKₐ), bei welchen eine zugehörige Drehmomenttrajektorie (M) und eine magnetische Statorflusstrajektorie (φ) zum (k+N)-ten Abtastzeitpunkt jeweils innerhalb eines vorgegebenen Wertebereichs liegt, oder bei welchen sich die Trajektorienwerte (M_{T},ₖ, ..., M_{T,k+N}) einer zugehörigen Drehmomenttrajektorie (M) und die Trajektorienwerte (φ_{T,k}, ..., φ_{T,k+N}) einer zugehörigen magnetischen Statorflusstrajektorie (φ) bezüglich des k-ten Abtastzeitpunktes bis zum (k+N)-ten Abtastzeitpunkt dem jeweiligen vorgegebenen Wertebereich annähert,
**dadurch gekennzeichnet,**
**dass** die Auswahl der Schaltzustandskombination (SK_{a,k}) in folgenden weiteren Schritten erfolgt:
(f) für jede der ausgewählten Schaltzustandssequenzen (SSKₐ) Bestimmung der Anzahl Zeitpunkte n, bis die Extrapolation der Trajektorienwerte (M_{T,k+N-1}, M_{T,k+N}) der zugehörigen Drehmomenttrajektorie (M) oder der Trajektorienwerte (φ_{T,K+N-1}, φ_{T,k+N}) der magnetischen Statorflusstrajektorie (φ) bezüglich des (k+N-1)-ten Abtastzeitpunktes und (k+N)-ten Abtastzeitpunktes ausserhalb des jeweiligen vorgegebenen Wertebereichs liegt,
(g) für jede der ausgewählten Schaltzustandssequenzen (SSKₐ) Bestimmung der Gesamtanzahl Schaltübergänge s der zugehörigen bestimmten Schaltzustandskombinationen (SKₖ, ..., SK_{K+N-1}).
(h) für jede der ausgewählten Schaltzustandssequenzen (SSKₐ) Berechnung eines Gütewertes c aus der Anzahl Zeitpunkte n und der Gesamtanzahl Schaltübergänge s,
(i) Setzen derjenigen bestimmten Schaltzustandskombination (SKₖ) zum Startabtastzeitpunkt k als ausgewählte Schaltzustandskombination (SKₐ,_{K}), bei der der Gütewert c der zugehörigen ausgewählten Schaftzustandssequenz (SSKₐ) am kleinsten ist,
(j) Wiederholung der Schritte (a) bis (i), wobei k=k+1 ist.

2. Verfahren nach Anspruch 1, **dadurch gekennzeichnet, dass** für m ≥ 3 die Umrichterschaltung (2) zur Schaltung m Spannungsniveaus am Gleichspannungskreis (3) m-2 Teilanschlüsse (NP) aufweist und bezüglich
Schritt (d) für jede der Schaltzustandssequenzen (SSK) zusätzlich m-2 Potentialtrajektorien (U_{NP}) für Potentiale an den m-2 Teilanschlüssen (NP) aus ermittelten Zustandswertesätzen (X_{e,k},... , X_{e,k+N}) der rotierenden elektrischen Maschine (1) und der Umrichterschaltung (2) für den Startabtastzeitpunkt k bis zum Abtastzeitpunkt k+N berechnet werden, dass bezüglich
Schritt (e) die Schaltzustandssequenzen (SSKₐ) ausgewählt werden, bei welchen zusätzlich zugehörige m-2 Potentialtrajektorien (U_{NP}) zum (k+N)-ten Abtastzeitpunkt jeweils innerhalb eines vorgegebenen Wertebereichs liegen, oder
bei welchen sich zusätzlich die Trajektorienwerte (U_{NP,k}, ..., U_{NP,k+N}) zugehöriger m-2 Potentialtrajektorien (U_{NP}) bezüglich des k-ten Abtastzeitpunktes bis zum (k+N)-ten Abtastzeitpunkt dem jeweiligen vorgegebenen Wertebereich annähern, und dass bezüglich Schritt (f) für jede der ausgewählten Schaltzustandssequenzen (SSKₐ) die Anzahl Zeitpunkte n bestimmt wird, bis die Extrapolation der Trajektorienwerte (M_{T,k+N-1}, M_{T,k+N}) der zugehörigen Drehmomenttrajektorie (M) oder der Trajektorienwerte (φ_{T,k+N-1,} φ_{T,k+N}) der magnetischen Statorflusstrajektorie (φ) oder der Trajektorienwerte (U_{NP,k+N-1}, U_{NP,k+N}) der m-2 Potentialtrajektorien (U_{NP}) bezüglich des (k+N-1)-ten Abtastzeitpunktes und (k+N)-ten Abtastzeitpunktes ausserhalb des jeweiligen vorgegebenen Wertebereichs liegt.

3. Verfahren nach Anspruch 1, **gekennzeichnet durch** den weiteren Schritt (k):
Aussetzen von Schritt (b) und Schritt (c) und Bildung einer Schaltzustandssequenz (SSK) für die vorangehende ausgewählte Schaltzustandskombination (SK_{a,k-1}), wobei die Schaltzustandssequenz (SSK) eine Aneinanderreihung von N vorangehenden ausgewählten Schaltzustandskombination (SK_{a,k-1}) ist, und Setzen der vorangehenden ausgewählten Schaltzustandskombination (SK_{a,k-1}) als ausgewählte Schaltzustandskombination (SK_{a,k}) und Anwendung von Schritt (d) und Aussetzung der Schritte (e) bis (i), falls die Trajektorienwerte (M_{T,k}, ..., M_{T,k+N}) der zugehörigen Drehmomenttrajektorie (M) und die Trajektorienwerte (φ_{T,k}, ..., φ_{T,k+N}) der zugehörigen magnetischen Statorflusstrajektorie (φ) bezüglich des k-ten Abtastzeitpunktes bis zum (k+N)-ten Abtastzeitpunkt innerhalb des jeweiligen vorgegebenen Wertebereichs liegen.

4. Verfahren nach Anspruch 2, **gekennzeichnet durch** den weiteren Schritt (k):
Aussetzen von Schritt (b) und Schritt (c) und Bildung einer Schaltzustandssequenz (SSK) für die vorangehende ausgewählte Schaltzustandskombination (SK_{a,k-1}), wobei die Schaltzustandssequenz (SSK) eine Aneinanderreihung von N vorangehenden ausgewählten Schaltzustandskombination (SK_{a,k-1}) ist, und Setzen der vorangehenden ausgewählten Schaltzustandskombination (SK_{a,k-1}) als ausgewählte Schaltzustandskombination (SK_{a,k}) und Anwendung von Schritt (d) und Aussetzung der Schritte (e) bis (i), falls die Trajektorienwerte (M_{T,k}, ..., M_{T,k+N}) der zugehörigen Drehmomenttrajektorie (M), die Trajektorienwerte (φ_{T,k}, ..., φ_{T},_{k+N}) der zugehörigen magnetischen Statorflusstrajektorie (φ) und die Trajektorienwerte (U_{NP,k}, ..., U_{NP,k+N}) zugehöriger m-2 Potentialtrajektorien (U_{NP}) bezüglich des k-ten Abtastzeitpunktes bis zum (k+N)-ten Abtastzeitpunkt innerhalb des jeweiligen vorgegebenen Wertebereichs liegen.

5. Verfahren nach einem der Ansprüche 1 bis 4, **dadurch gekennzeichnet, dass** für die Extrapolation der Trajektorienwerte (M_{T,k+N-1}, M_{T},_{k+N}) der Drehmomenttrajektorie (M) und der Trajektorienwerte (φ_{T},_{k+N-1}, φ_{T,k+N}) der magnetischen Statorflusstrajektorie (φ) jeweils eine lineare Extrapolation gewählt wird.

6. Verfahren nach einem der Ansprüche 2 oder 4, **dadurch gekennzeichnet, dass** für die Extrapolation der Trajektorienwerte (M_{T},_{k+N-1}, M_{T,k+N}) der Drehmomenttrajektorie (M), der Trajektorienwerte (φ_{T,k+N-1}, φ_{T,k+N}) der magnetischen Statorflusstrajektorie (φ) und der Trajektorienwerte (U_{NP,k+N-1}, U_{NP,k+N}) der m-2 Potentialtrajektorien (U_{NP}) jeweils eine lineare Extrapolation gewählt wird.

7. Verfahren nach einem der Ansprüche 1 bis 4, **dadurch gekennzeichnet, dass** für die Extrapolation der Trajektorienwerte (M_{T,k+N-1}, M_{T,k+N}) der Drehmomenttrajektorie (M) und der Trajektorienwerte (φ_{T,k+N-1}, φ_{T,k+N}) der magnetischen Statorflusstrajektorie (φ) jeweils eine quadratische Extrapolation gewählt wird.

8. Verfahren nach einem der Ansprüche 2 oder 4, **dadurch gekennzeichnet, dass** für die Extrapolation der Trajektorienwerte (M_{T,k+N-1}, M_{T,k+N}) der Drehmomenttrajektorie (M) und der Trajektorienwerte (φ_{T},_{k+N-1}, φ_{T,k+N}) der magnetischen Statorflusstrajektorie (φ) jeweils eine quadratische Extrapolation gewählt wird, und
dass für die Extrapolation der Trajektorienwerte (U_{NP,k+N-1}, U_{NP,k+N}) der m-2 Potentialtrajektorien (U_{NP}) eine lineare Extrapolation gewählt wird.

9. Verfahren nach einem der Ansprüche 1 bis 4, **dadurch gekennzeichnet, dass** für die Extrapolation der Trajektorienwerte (M_{T,k+N-1}, M_{T,k+N}) der Drehmomenttrajektorie (M) eine lineare Extrapolation gewählt wird, und
dass für die Extrapolation der Trajektorienwerte (φ_{T,k+N-1}, φ_{T,k+N}) der magnetischen Statorflusstrajektorie (φ) eine quadratische Extrapolation gewählt wird.

10. Verfahren nach einem der Ansprüche 2 oder 4, **dadurch gekennzeichnet, dass** für die Extrapolation der Trajektorienwerte (M_{T,k+N-1,} M_{T,k+N}) der Drehmomenttrajektorie (M) und der Trajektorienwerte (U_{NP,k,N-1}, U_{NP,k+N}) der m-2 Potentialtrajektorien (U_{NP}) jeweils eine lineare Extrapolation gewählt wird, und
dass für die Extrapolation der Trajektorienwerte (φ_{T,k+N-1}, φ_{T,k+N}) der magnetischen Statorflusstrajektorie (φ) eine quadratische Extrapolation gewählt wird.

11. Verfahren nach einem der vorhergehenden Ansprüche, **dadurch gekennzeichnet, dass** der Gütewert c durch Division der Gesamtanzahl Schaltübergänge s durch die Anzahl Zeitpunkte n berechnet wird.

## Claims

1. Method for operating a rotating electrical machine (1), the rotating electrical machine being connected in terms of phase to a converter circuit (2), having a DC voltage circuit (3), for connecting m voltage levels, where m ≥ 2, having the following steps
(a) connection of the phases (u, v, w) of the converter circuit (2) to the DC voltage circuit (3) in accordance with a selected switching state combination (SKₐ,ₖ) of switching states for power semiconductor switches in the converter circuit (2), selection of the switching state combination (SKₐ,ₖ) in the following steps:
(b) beginning with a starting sampling time k for a selectable number N of sampling times: determination of all the permissible switching state combinations (SKₖ, ..., SK_{k+N-1}) at each of the N sampling times, where N ≥ 1,
(c) formation of switching state sequences (SSK) for each determined switching state combination (SKₖ) at the starting sampling time k, each switching state sequence (SSK) being an arrangement of determined switching state combinations (SKₖ, ..., SK_{k+N-1}) of the N sampling times next to one another in a row, said switching state combinations (SKₖ, ..., SK_{k+N-1}) being associated with the respective switching state combination (SKₖ) at the starting sampling time k,
(d) for each of the switching state sequences (SSK), calculation of a torque trajectory (M) of the rotating electrical machine (1) and a magnetic stator flux trajectory (φ) of the rotating electrical machine (1) from determined state value sets (X_{e,k}, ..., X_{e, k+N}) of the rotating electrical machine (1) and the converter circuit (2) for the starting sampling time k up to the sampling time k+N,
(e) selection of the switching state sequences (SSKₐ) in which an associated torque trajectory (M) and a magnetic stator flux trajectory (φ) at the (k+N)-th sampling time are in each case within a predetermined value range, or
in which the trajectory values (M_{T,k}, ..., M_{T,k+N}) of an associated torque trajectory (M) and the trajectory values (φ_{T,k}, ... , φ_{T, k+N}) of an associated magnetic stator flux trajectory (φ) with respect to the k-th sampling time up to the (k+N)-th sampling time approach the respective predetermined value range,
**characterized**
**in that** the selection of the switching state combination (SK_{a,k}) takes place in the following further steps:
(f) for each of the selected switching state sequences (SSKₐ), determination of the number of times n until the extrapolation of the trajectory values (M_{T,k+N-1}, M_{T},_{k+N}) of the associated torque trajectory (M) or the trajectory values (φ_{T,k+N-1}, φ_{T,k+N}) of the magnetic stator flux trajectory (φ) with respect to the (k+N-1)-th sampling time and (k+N)-th sampling time is outside the respective predetermined value range,
(g) for each of the selected switching state sequences (SSKₐ), determination of the total number of switching transitions s of the associated determined switching state combinations (SKₖ, ..., SK_{k+N-1}),
(h) for each of the selected switching state sequences (SSKₐ) , calculation of a quality value c from the number of times n and the total number of switching transitions s,
(i) setting that determined switching state combination (SKₖ) at the starting sampling time k as the selected switching state combination (SK_{a,k}) with which the quality value c of the associated selected switching state sequence (SSKₐ) is at its smallest,
(j) repetition of steps (a) to (i), where k=k+1.

2. Method according to Claim 1, **characterized in that**, for m ≥ 3, the converter circuit (2) for connecting m voltage levels has m-2 subconnections (NP) at the DC voltage circuit (3) and, with respect to step (d), for each of the switching state sequences (SSK), in addition m-2 potential trajectories (U_{NP}) for potentials at the m-2 subconnections (NP) are calculated from determined state value sets (Xₑ,ₖ, ..., Xₑ, _{k+N}) of the rotating electrical machine (1) and the converter circuit (2) for the starting sampling time k up to the sampling time k+N, **in that**, with respect to
step (e), the switching state sequences (SSKₐ) are selected in which, in addition, associated m-2 potential trajectories (U_{NP}) at the (k+N)-th sampling time are in each case within a predetermined value range, or
in which, in addition, the trajectory values (U_{NP},ₖ, ..., U_{NP,k+N}) of associated m-2 potential trajectories (U_{NP}) with respect to the k-th sampling time up to the (k+N)-th sampling time approach the respective predetermined value range, and **in that**, with respect to
step (f), for each of the selected switching state sequences (SSKₐ), the number of times n is determined until the extrapolation of the trajectory values (M_{T,k+N}-1, M_{T},_{k+N}) of the associated torque trajectory (M) or the trajectory values (φ_{T,k+N-1}, φ_{T,k+N}) of the magnetic stator flux trajectory (φ) or the trajectory values (U_{NP,k+N-1}, U_{NP},_{k+N}) of the m-2 potential trajectories (U_{NP}) with respect to the (k+N-1)-th sampling time and (k+N)-th sampling time is outside the respective predetermined value range.

3. Method according to Claim 1, **characterized by** the further step (k):
omission of step (b) and step (c) and formation of a switching state sequence (SSK) for the preceding selected switching state combination (SK_{a,k-1}) , the switching state sequence (SSK) being an arrangement of N preceding selected switching state combinations (SK_{a,k}-₁) next to one another in a row, and setting the preceding selected switching state combination (SK_{a,k-1}) as the selected switching state combination (SK_{a,k}) and application of step (d) and omission of steps (e) to (i) if the trajectory values (MT, k, ..., M_{T, k+N}) of the associated torque trajectory (M) and the trajectory values (φ_{T,k}, ..., φ_{T,k+N}) of the associated magnetic stator flux trajectory (φ) with respect to the k-th sampling time up to the (k+N)-th sampling time are within the respective predetermined value range.

4. Method according to Claim 2, **characterized by** the further step (k):
omission of step (b) and step (c) and formation of a switching state sequence (SSK) for the preceding selected switching state combination (SK_{a,k-1}), the switching state sequence (SSK) being an arrangement of N preceding selected switching state combinations (SK_{a,k}-₁) next to one another in a row, and setting the preceding selected switching state combination (SK_{a,k-1}) as the selected switching state combination (SK_{a,k}) and application of step (d) and omission of steps (e) to (i) if the trajectory values (M_{T},ₖ, ... , M_{T, k+N}) of the associated torque trajectory (M), the trajectory values (φ_{T},ₖ, ..., φ_{T,k+N}) of the associated magnetic stator flux trajectory (φ) and the trajectory values (U_{NP,k}, ..., U_{NP,k+N}) of associated m-2 potential trajectories (U_{NP}) with respect to the k-th sampling time up to the (k+N)-th sampling time are within the respective predetermined value range.

5. Method according to one of Claims 1 to 4, **characterized in that** in each case a linear extrapolation is selected for the extrapolation of the trajectory values (M_{T, k+N-1}, M_{T}, _{k+N}) of the torque trajectory (M) and the trajectory values (φ_{T},_{k+N-1}, φ_{T},_{k+N}) of the magnetic stator flux trajectory (φ).

6. Method according to either of Claims 2 and 4, **characterized in that** in each case a linear extrapolation is selected for the extrapolation of the trajectory values (M_{T,k+N-1}, M_{T,k+N}) of the torque trajectory (M), the trajectory values (φ_{T},_{k+N-1}, φ_{T, k+N}) of the magnetic stator flux trajectory (φ) and the trajectory values (U_{NP,k+N-1}, U_{NP,k+N}) of the m-2 potential trajectories (U_{NP}).

7. Method according to one of Claims 1 to 4, **characterized in that** in each case a quadratic extrapolation is selected for the extrapolation of the trajectory values (M_{T}, _{k+N-1}, M_{T}, _{k+N}) of the torque trajectory (M) and the trajectory values (φ_{T},_{k+N-1}, φ_{T, k+N}) of the magnetic stator flux trajectory (φ).

8. Method according to either of Claims 2 and 4, **characterized in that** in each case a quadratic extrapolation is selected for the extrapolation of the trajectory values (M_{T, k+N-1}, M_{T, k+N}) of the torque trajectory (M) and the trajectory values (φ_{T},_{k+N-1}, φ_{T},_{k+N}) of the magnetic stator flux trajectory (φ), and
**in that** a linear extrapolation is selected for the extrapolation of the trajectory values (U_{NP,k+N-1}, U_{NP,k+N}) of the m-2 potential trajectories (U_{NP}).

9. Method according to one of Claims 1 to 4, **characterized in that** a linear extrapolation is selected for the extrapolation of the trajectory values (M_{T},_{k+N-1}, M_{T}, _{k+N}) of the torque trajectory (M), and
**in that** a quadratic extrapolation is selected for the extrapolation of the trajectory values (φ_{T},_{k+N-1}, φ_{T,k+N}) of the magnetic stator flux trajectory (φ).

10. Method according to either of Claims 2 and 4, **characterized in that** in each case a linear extrapolation is selected for the extrapolation of the trajectory values (M_{T}, _{k+N-1}, M_{T}, _{k+N}) of the torque trajectory (M) and the trajectory values (U_{NP, k+N-1}, U_{NP,k+N}) of the m-2 potential trajectories (U_{NP}), and
**in that** a quadratic extrapolation is selected for the extrapolation of the trajectory values (φ_{T,k+N-1}, φ_{T,k+N}) of the magnetic stator flux trajectory (φ).

11. Method according to one of the preceding claims, **characterized in that** the quality value c is calculated by dividing the total number of switching transitions s by the number of times n.

## Revendications

1. Procédé d'utilisation d'une machine électrique tournante (1), dans lequel la machine électrique tournante est reliée phase par phase à un circuit redresseur (2) qui présente un circuit (3) à tension continue, pour la commutation de m niveaux de tension, m ≥ 2,
lequel procédé présentant les étapes qui consistent à :
(a) relier les phases (u, v, w) du circuit redresseur (2) au circuit (3) à tension continue selon une combinaison (SK_{a,k}) sélectionnée d'états de commutation de commutateurs à semiconducteur de puissance du circuit redresseur (2),
sélectionner la combinaison (SK_{a,k}) d'états de commutation par les étapes qui consistent à :
(b) partant d'un instant initial d'échantillonnage k d'un nombre N sélectionnable d'instants d'échantillonnage, déterminer toutes les combinaisons admissibles (SKₖ, ..., SK_{k+N-1}) d'états de commutation pour chacun des N instants d'échantillonnage, N ≥ 1,
(c) pour chaque combinaison (SKₖ) d'états de commutation à l'instant initial d'échantillonnage k, former des séquences (SSK) d'états de commutation, chaque séquence (SSK) d'états de commutation étant constituée de la mise en série de combinaisons (SKₖ, ... , SK_{k+N-1}) des N instants d'échantillonnage définis associés à chaque combinaison (SKₖ) d'états de commutation à l'instant initial d'échantillonnage k,
(d) pour chacune des séquences (SSK) d'états de commutation, calculer une trajectoire (M) de couples de rotation de la machine électrique tournante (1) et une trajectoire (φ) de flux magnétiques de stator de la machine électrique tournante (1) à partir de jeux (X_{e,k}, ..., X_{e,k+N}) de valeurs d'état déterminées de la machine électrique tournante (1) et du circuit redresseur (2) de l'instant initial d'échantillonnage k à l'instant d'échantillonnage k+N,
(e) sélectionner les séquences (SSKₐ) d'états de commutation pour lesquelles la trajectoire associée (M) des couples de rotation et la trajectoire (φ) des flux magnétiques de stator à l'instant d'échantillonnage (k+N) est située à l'intérieur d'une plage prédéterminée de valeurs ou pour laquelle les valeurs (M_{T,k}, ..., M_{T,k+N}) d'une trajectoire (M) associée des couples de rotation et les valeurs (φ_{T, k}, ... φ_{T,k+N}) d'une trajectoire associée (φ) des flux magnétiques de stator s'approche de la plage de valeurs prédéterminées entre l'instant d'échantillonnage k et l'instant d'échantillonnage (k+N),
**caractérisé en ce que**
la sélection de la combinaison (SK_{a,k}) d'états de commutation s'effectue par les autres étapes ci-dessous, qui consistent à :
(f) pour chacune des séquences (SSKₐ) sélectionnées d'états de commutation, déterminer le nombre n d'instants qui sont survenus jusqu'à ce que l'extrapolation des valeurs (M_{T},_{k+N-1,} M_{T},_{k+N}) de la trajectoire (M) associée des couples de rotation ou des valeurs (φ_{T},_{k+N-1}, φ_{T,k+N}) des trajectoires (φ) de flux magnétique de stator soit située à l'extérieur de la plage de valeurs prédéterminées entre l'instant d'échantillonnage (k+N-1) et l'instant d'échantillonnage (k+N),
(g) pour chacune des séquences (SSKₐ) sélectionnées d'états de commutation, déterminer le nombre total s de transitions de commutation des combinaisons définies (SKₖ, ..., SK_{k+N-1}) d'états de commutation associées,
(h) pour chacune des séquences (SSKₐ) d'états de commutation sélectionnées, calculer une valeur de qualité c constituée du nombre n d'instants et du nombre total s de transitions de commutation,
(i) sélectionner la combinaison (SKₖ) définie d'états de commutation à l'instant initial d'échantillonnage k comme combinaison (SK_{a,k}) sélectionnée d'états de commutation qui correspond à la plus petite valeur de qualité c de la séquence (SSKₐ) sélectionnée d'états de commutation associée et
(j) répéter les étapes (a) à (i) avec k=k+1 .

2. Procédé selon la revendication 1, **caractérisé en ce que** pour m ≥ 3, le circuit convertisseur (2) présente m-2 raccordements partiels (NP) pour le raccordement de m niveaux de tension au circuit (3) à courant continu, et
**en ce qu'**à l'étape (d), pour chacune des séquences (SSK) d'états de commutation, m-2 trajectoires (U_{NP}) de potentiel aux m-2 raccordements partiels (NP) sont calculées en supplément à partir de jeux de valeurs d'état (X_{e,k}, ..., X_{e,k+N)} déterminés sur la machine électrique tournante (1) et sur le circuit redresseur (2) entre l'instant d'échantillonnage initial k jusqu'à l'instant d'échantillonnage k+N,
**en ce qu'**à l'étape (e), les séquences (SSKₐ) d'états d'échantillonnage sélectionnées sont celles pour lesquelles m-2 trajectoires de potentiel (U_{NP}) associées à l'instant d'échantillonnage (k+N) sont toutes situées à l'intérieur d'une plage prédéterminée de valeurs ou pour laquelle les valeurs (U_{NP,k}, ..., U_{NP},_{k+N}) des m-2 trajectoires de potentiel (U_{NP}) associées s'approchent de la plage prédéterminée de valeurs de l'instant d'échantillonnage k à l'instant d'échantillonnage (k+N) et
**en ce qu'**à l'étape (f), pour chacune des séquences (SSKₐ) sélectionnées d'états de commutation, on détermine le nombre n d'instants d'échantillonnage qui surviennent jusqu'à ce que l'extrapolation des valeurs (M_{T,k+N-1}, M_{T,k+N}) des trajectoires (M) de couple de rotation associées, des valeurs (φ_{T,k+N-1}, φ_{T,k+N}) des trajectoires (φ) de flux magnétique de stator ou des valeurs (U_{NP,k+N-1}, U_{NP,k+N}) des m-2 trajectoires de potentiel (U_{NP}) soit située à l'extérieur de la plage prédéterminée de valeurs à l'instant d'échantillonnage (k+N-1) et à l'instant d'échantillonnage (k+N).

3. Procédé selon la revendication 1, **caractérisé par** l'étape supplémentaire (k) qui consiste à :
suspendre l'étape (b) et l'étape (c) et former une séquence (SSK) d'états de commutation pour la combinaison (SK_{a,k-1}) d'états de commutation sélectionnée précédemment, la séquence (SSK) d'états de commutation étant formée de la mise en série des N combinaisons (SK_{a,k-1}) d'états de commutation sélectionnées précédemment, et définir la combinaison (SK_{a,k-1}) d'états de commutation précédemment sélectionnée comme combinaison (SK_{a,k}) sélectionnée d'états de commutation, appliquer l'étape (d) et suspendre les étapes (e) à (i) au cas où les valeurs (M_{T,k}, ..., M_{T,k+N}) des trajectoires (M) de couple de rotation associées et les valeurs (φ_{T,k}, ..., φ_{T,k+N}) des trajectoires (φ) de flux magnétique de stator associées sont situées à l'intérieur de la plage prédéterminée de valeurs entre l'instant d'échantillonnage k et l'instant d'échantillonnage (k+N).

4. Procédé selon la revendication 2, **caractérisé par** l'étape (k) supplémentaire qui consiste à :
suspendre l'étape (b) et l'étape (c) et former une séquence (SSK) d'états de commutation pour la combinaison (SK_{a,k-1}) d'états de commutation sélectionnée précédemment, la séquence (SSK) d'états de commutation étant constituée de la mise en série de N combinaisons (SK_{a,k-1}) d'états de commutation sélectionnées précédemment, définir la combinaison (SK_{a,k-1}) d'états de commutation sélectionnée comme combinaison (SK_{a,k}) d'états de commutation sélectionnée et appliquer l'étape (d) avec suspension des étapes (e) à (i) au cas où les valeurs (M_{T,k}, ..., M_{T,k+N}) des trajectoires (M) associées des couples de rotation, les valeurs (φ_{T,k}, ..., φ_{T,k+N}) des trajectoires (φ) associées de flux magnétique de stator et les valeurs (U_{NP,k}, ..., U_{NP,k+N}) des m-2 trajectoires de potentiel (U_{NP}) associées sont situées à l'intérieur de la plage prédéterminée de valeurs respectives de l'instant d'échantillonnage k à l'instant d'échantillonnage (k+N).

5. Procédé selon l'une des revendications 1 à 4, **caractérisé en ce que** pour l'extrapolation des valeurs (M_{T,k+N-1}, M_{T,k+N}) des trajectoires (M) de couple de rotation et des valeurs (φ_{T,k+N-1}, φ_{T,k+N}) des trajectoires (φ) de flux magnétique de stator, on sélectionne chaque fois une extrapolation linéaire.

6. Procédé selon l'une des revendications 2 ou 4, **caractérisé en ce que** pour l'extrapolation des valeurs (M_{T,k+N-1}, M_{T,k+N}) des trajectoires (M) de couple de rotation, des valeurs (φ_{T,k+N-1}, φ_{T,k+N}) des trajectoires (φ) de flux magnétique de stator et des valeurs (U_{NP,k+N-1} , U_{NP},_{k+N}) des m-2 trajectoires de potentiel (U_{NP}), on sélectionne chaque fois une extrapolation linéaire.

7. Procédé selon l'une des revendications 1 à 4, **caractérisé en ce que** pour l'extrapolation des valeurs (M_{T,k+N-1}, M_{T,k+N}) des trajectoires (M) de couple de rotation et des valeurs (φ_{T,k+N-1}, φ_{T,k+N}) des trajectoires (φ) de flux magnétique de stator, on sélectionne chaque fois une extrapolation quadratique.

8. Procédé selon l'une des revendications 2 ou 4,
**caractérisé en ce que** pour l'extrapolation des valeurs (M_{T,k+N-1}, M_{T,k+N}) des trajectoires (M) de couple de rotation et des valeurs (φ_{T,k+N-1}, φ_{T,k+N}) des trajectoires (φ) de flux magnétique de stator, on sélectionne chaque fois une extrapolation quadratique et **en ce que** pour l'extrapolation des valeurs (U_{NP,k+N-1}, U_{NP,k+N}) des m-2 trajectoires de potentiel (U_{NP}), on sélectionne une extrapolation linéaire.

9. Procédé selon l'une des revendications 1 à 4, **caractérisé en ce que** pour l'extrapolation des valeurs (M_{T},_{k+N-1}, M_{T,k+N}) des trajectoires (M) de couple de rotation, on sélectionne une extrapolation linéaire et **en ce que** pour l'extrapolation des valeurs (φ_{T,k+N-1}, φ_{T,k+N}) des trajectoires (φ) de flux magnétique de stator, on sélectionne une extrapolation quadratique.

10. Procédé selon l'une des revendications 2 ou 4, **caractérisé en ce que** pour l'extrapolation des valeurs (M_{T},_{k+N-1}, M_{T},_{k+N}) des trajectoires (M) de couple de rotation et des valeurs (U_{NP},_{k+N-1}, U_{NP,k+N}) des m-2 trajectoires de potentiel (U_{NP}), on sélectionne chaque fois une extrapolation linéaire et **en ce que** pour l'extrapolation des valeurs (φ_{T,k+N-1}, φ_{T,k+N}) des trajectoires (φ) de flux magnétique de stator, on sélectionne une extrapolation quadratique.

11. Procédé selon l'une des revendications précédentes, **caractérisé en ce que** la valeur de qualité est calculée par division du nombre total s de transitions de commutation par le nombre des instants n.
